Europäisches Patentamt

European Patent Office

Office européen des brevets

(19)

(11) Veröffentlichungsnummer: **0 451 598 B1**

## (12) EUROPÄISCHE PATENTSCHRIFT

(45) Veröffentlichungstag der Patentschrift: **21.09.94**

(51) Int. Cl.⁵: **C07F 9/38**

(21) Anmeldenummer: **91104724.9**

(22) Anmeldetag: **26.03.91**

(54) **Verfahren zur Entfernung von bzw. zur Verminderung des Gehaltes an 1-Carboxy-1-phosphonocyclopentan-3-on aus technischer 2-Phosphonobutan-1,2,4-tricarbonsäure mittels Bleichlauge.**

(30) Priorität: **07.04.90 DE 4011379**

(43) Veröffentlichungstag der Anmeldung:
**16.10.91 Patentblatt 91/42**

(45) Bekanntmachung des Hinweises auf die
Patenterteilung:
**21.09.94 Patentblatt 94/38**

(84) Benannte Vertragsstaaten:
**CH DE ES FR GB IT LI**

(56) Entgegenhaltungen:
**EP-A- 0 358 022**
**DE-A- 2 061 838**

(73) Patentinhaber: **BAYER AG**

**D-51368 Leverkusen (DE)**

(72) Erfinder: **Immenkeppel, Michael, Dr.**
**Blücher Strasse 32**
**W-5300 Bonn 1 (DE)**
Erfinder: **Kleinstück, Roland, Dr.**
**Am Katterbach 5**
**W-5060 Bergisch Gladbach (DE)**
Erfinder: **Block, Hans-Dieter, Dr.**
**Biesenbach 49**
**W-5090 Leverkusen 3 (DE)**
Erfinder: **Sicius, Hermann, Dr.**
**Bismarckstrasse 54**
**W-4000 Düsseldorf 1 (DE)**
Erfinder: **Schmidt, Peter, Dr.**
**Drosselweg 6**
**W-5090 Leverkusen 3 (DE)**

**Beschreibung**

Die vorliegende Erfindung betrifft ein Verfahren zur Entfernung von bzw. zur Verminderung des Gehaltes an 1-Carboxy-1-phosphonocyclopentan-3-on (im folgenden als "Keton" bezeichnet) aus in Wasser gelöster technischer 2-Phosphonobutan-1,2,4-tricarbonsäure (im folgenden als PBTC bezeichnet) mittels Bleichlauge.

Die technische Herstellung des Korrosions- und Steininhibitors PBTC erfolgt in drei Stufen. Zunächst wird Dimethylphosphit mit Maleinsäureanhydrid zu Phosphonobernsteinsäuretetramethylester umgesetzt, der durch die mittels Natriummethylat katalysierte Reaktion mit Acrylsäuremethylester in 2-Phosphonobutan-1,2,4-tricarbonsäurepentamethylester überführt wird (DE-OS 2 061 838). Dieser Ester wird dann zu PBTC verseift. Bei dieser Herstellung von PBTC bzw. einer wäßrigen Lösung von PBTC bildet sich als Nebenprodukt 1-Phosphono-1-carboxycyclopentan-3-on, das sich bei einigen technischen Anwendungen des PBTC bzw. einer wäßrigen Lösung von PBTC oder seiner Na-, K- bzw. $NH_4$-Salze nachteilig auswirkt. So kommt es beispielsweise in der Anwendung von PBTC bei der Herstellung von speziellen Reinigern zu Dunkelfärbungen.

Aufgabe war es daher, ein Verfahren zur Verfügung zu stellen, das es gestattet, dieses störende Keton aus der wäßrigen Lösung von PBTC ohne gleichzeitige Zerstörung des Wirkstoffes PBTC zu entfernen bzw. seinen Gehalt zu verringern.

Gegenstand der vorliegenden Erfindung ist ein Verfahren zur Entfernung von bzw. zur Verminderung des Gehaltes an 1-Phosphono-1-carboxy-cyclopentan-3-on (Keton) aus einer wäßrigen Lösung von 2-Phosphonobutan-1,2,4-tricarbonsäure, dadurch gekennzeichnet, daß die Lösung mit einer wäßrigen anorganischen Base, insbesondere Natronlauge, auf einen pH-Wert von > 6 eingestellt und anschließend wäßrige Bleichlauge in einem Molverhältnis von NaOCl : Keton von > 5 : 1 zugegeben wird.

Besonders bevorzugt ist ein Verfahren, bei dem die Lösung nach der Zugabe der wäßrigen Bleichlauge bei 70-100 °C getempert wird.

In einer besonderen Verfahrensvariante wird die Lösung vor Zugabe der Bleichlauge auf einen pH-Wert von 9-10 eingestellt.

Bevorzugt wird die Bleichlauge in einem Molverhältnis NaOCl : Keton wie 12 : 1 bis 30 : 1 zugegeben.

Das Verfahren kann sowohl kontinuierlich als auch diskontinuierlich durchgeführt werden.

Bei der Reaktion gebildete flüchtige Substanzen werden nach üblichen Verfahren aus der Reaktionslösung entfernt.

Nach Durchführung des erfindungsgemäßen Verfahrens kann durch Eindampfen oder durch Verdünnen mit Wasser oder mit anderen wäßrigen Lösungen, z.B. Natronlauge, die Konzentration auf einen gewünschten Wert eingestellt werden.

Das erfindungsgemäße Verfahren soll anhand der folgenden Beispiele näher erläutert werden.

Beispiel 1

Entfernung von 1-Phosphono-1-carboxy-cyclopentan-3-on aus einer wäßrigen Lösung von 2-Phosphonobutan-1,2,4-tricarbonsäure:

108 g einer 48,8 (bzw. 48,4) gew.-%igen, technischen PBTC-Lösung in Wasser (entsprechend einem Gehalt von 0,195 mol 2-Phosphonobutan-1,2,4-tricarbonsäure (PBTC) unter Vernachlässigung von Verunreinigungen wie Phosphonobernstein- und Phosphonopropionsäure), die 1,2 (bzw. 1,6) Gew.-% (entsprechend 0,0062 (bzw. 0,0083) mol) Keton enthalten, werden mit 81,5 g (bzw. mit 84 g) 45 gew.-%iger Natronlauge auf pH 9 (bzw. auf pH 10) gestellt. Zu dieser auf einer Temperatur von 50 °C (bzw. 60 °/70 ° oder 80 °C) gehaltenen Lösung werden 91,7 g NaOCl-Lösung (entsprechend 0,168 mol NaOCl, Molverhältnis NaOCl:Keton 27:1 bzw. 20,2:1) getropft. Anschließend werden die Lösungen weiter 15 min. bei 100 °C getempert. Die Ergebnisse sind in Tabelle 1 zusammengefaßt.

Beispiel 2

540 g einer 48,5 gew.-%igen, wäßrigen Lösung von 2-Phosphonbutan-1,2,4-tricarbonsäure (entsprechend einem Gehalt von 0,97 mol PBTC), die 1,5 Gew.-% (entsprechend 0,039 mol) Keton enthalten, werden zunächst durch Zugabe von 230 ml 45 %iger NaOH auf pH = 7,1 gestellt. Die so resultierende Mischung wird mit 427 g Bleichlauge (entsprechend 0,782 mol NaOCl; Molverhältnis NaOCl: Keton 20,1:1) versetzt (pH-Wert der Mischung 8,3). Hiernach wird durch Zugabe von konz. HCl der pH-Wert des Reaktionsgemisches auf 7,5 gebracht.

Danach wird die Mischung 2 Stunden unter Rückfluß erhitzt. Die Ergebnisse sind in Tabelle 2 aufgeführt.

Beispiel 3

Versuchsdurchführung wie in Beispiel 2

Im Unterschied zu Beispiel 2 werden jedoch 171,5 g Bleichlauge (0,31 mol NaOCl; Molverhältnis NaOCl:Keton wie 8,1:1) eingesetzt. Außerdem wird der pH-Wert vor dem Erhitzen unter Rückfluß auf pH = 8 eingestellt. Ergebnisse siehe Tabelle 2.

Beispiel 4

Versuchsdurchführung wie in Beispiel 2

Im Unterschied zu Beispiel 2 werden jedoch 427 g Bleichlauge (0,782 mol NaOCl; Molverhältnis NaOCl:Keton wie 20,1:1) eingesetzt und der pH-Wert vor dem Erhitzen unter Rückfluß auf pH = 13,1 eingestellt. Ergebnisse siehe Tabelle 2.

Beispiel 5

270 g betrieblicher PBTC-Lösung (mit 48,6 Gew.-% PBTC und 1,4 Gew.-% Keton) werden durch Zugabe von 211 g 45 %iger Natronlauge auf pH 9 gebracht und auf 80°C erwärmt. Die Reaktionsmischung versetzt man mit 143,4 g (= 0,263 mol NaOCl, Molverhältnis NaOCl Keton 14,5:1) bzw. 286,8 g (= 0,526 mol NaOCl, Molverhältnis NaOCl:Keton 29:1) Bleichlauge und tempert die Lösungen 20 Minuten bei 80°C. Die Ergebnisse zeigt Tabelle 3.

Beispiel 6

270 g PBTC-Lösung (mit 48,6 Gew.-% PBTC und 1,4 Gew.-% Keton) werden durch Zugabe von 211 g 45 %iger Natronlauge auf pH = 9 gestellt. Die im Anschluß daran auf 20°C gekühlte Lösung wird mit 143,4 g (= 0,263 mol NaOCl; Molverhältnis NaOCl:Keton 14,5:1) bzw. 191,2 g (= 0,351 mol NaOCl; Molverhältnis NaOCl:Keton 19,3:1) Bleichlauge versetzt. Nach beendeter Zugabe läßt man noch 15 Minuten rühren und dann 24 Stunden bei Raumtemperatur stehen. Die Resultate sind in Tabelle 4 zusammengestellt.

Beispiel 7

270 g PBTC-Lösung (mit 48,6 Gew.-% PBTC und 1,4 Gew.-% Keton) werden mit 351,2 g 45 %iger Kalilauge auf pH = 13 gestellt. Nach Abkühlen der Mischung auf ca. 20°C werden 191,2 g (= 0,351 mol NaOCl; Molverhältnis NaOCl:Keton 19,3:1) Bleichlauge zugegeben. Danach läßt man noch 15 Minuten bei 20°C nachrühren und dann 24 Stunden bei Raumtemperatur stehen. Die Resultate sind in Tabelle 5 aufgeführt.

Beispiel 8

270 g PBTC-Lösung (mit 48,6 Gew.-% PBTC und 1,4 Gew.-% Keton) werden zusätzlich mit 0,75 g 70 %igem Keton versetzt, worauf der Ketongehalt der PBTC-Lösung auf 1,5 Gew.-% steigt.

Durch Zugabe von 137 ml 45 %iger Natronlauge wird der pH-Wert der Lösung auf 9 gestellt. Nach Erwärmen derselben auf 80°C werden innerhalb von 3 Minuten zu der auf kosntant 80°C gehaltenen Lösung 142,1 g Bleichlauge (= 0,26 mol NaOCl; Molverhältnis NaOCl:Keton 12,6:1) gegeben. Die Reaktionsmischung wird hiernach noch 1 Stunde bei 70°C (bzw. 80°C) bzw. 20 Minuten bei 90°C (bzw. 100°C) getempert. Die Ergebnisse sind in Tabelle 6 aufgelistet.

## Tabelle 1

| Probe | Menge an 45 gew.-% iger NaOH [g] | Temperatur der Lösung [°C] | pH-Wert | Molverhältnis NaOCl : Keton | Mol.-%Keton vor Reaktion | Mol.-% Keton nach Reaktion |
|---|---|---|---|---|---|---|
| 1 | 81,5 | 50 | 9 | 27 : 1 | 3,0 | 0 |
| 2 | 81,5 | 60 | 9 | 27 : 1 | 3,0 | 0 |
| 3 | 81,5 | 70 | 9 | 27 : 1 | 3,0 | 0 |
| 4 | 81,5 | 80 | 9 | 27 : 1 | 3,0 | 0 |
| 5 | 84,0 | 50 | 10 | 27 : 1 | 3,0 | 0 |
| 6 | 84,0 | 60 | 10 | 27 : 1 | 3,0 | 0 |
| 7 | 84,0 | 70 | 10 | 27 : 1 | 3,0 | 0 |
| 8 | 84,0 | 80 | 10 | 27 : 1 | 3,0 | 0 |
| 9 | 81,5 | 50 | 9 | 20,2 : 1 | 4,2 | 0 |
| 10 | 81,5 | 60 | 9 | 20,2 : 1 | 4,2 | 0 |
| 11 | 81,5 | 70 | 9 | 20,2 : 1 | 4,2 | 0 |
| 12 | 81,5 | 80 | 9 | 20,2 : 1 | 4,2 | 0 |
| 13 | 84,0 | 50 | 10 | 20,2 : 1 | 4,2 | 0 |
| 14 | 84,0 | 60 | 10 | 20,2 : 1 | 4,2 | 0 |
| 15 | 84,0 | 70 | 10 | 20,2 : 1 | 4,2 | 0 |
| 16 | 84,0 | 80 | 10 | 20,2 : 1 | 4,2 | 0 |

EP 0 451 598 B1

## Tabelle 2

| Probe | Menge an 45 Gew.-%iger NaOH [g] | pH-Wert | Molverhältnis NaOCl:Keton | Mol.-% Keton vor Reaktion | Mol.-% nach Reaktion |
|-------|------|------|---------|-----|-----|
| 17 | 230 | 7,5 | 20,1:1 | 3,9 | 0,9 |
| 18 | 228 | 8,0 | 8,1:1 | 3,9 | 1,0 |
| 19 | 293 | 13,1 | 20,1:1 | 3,9 | 0 |

## Tabelle 3

| Probe | Molverhältnis NaOCl:Keton | Temperung bei 80° C | Mol.-% Keton vor Reaktion | Mol.-% Keton nach Reaktion |
|-------|---------|----------------|-----|-----|
| 20 | 14,5:1 | nach  0 min. | 3,7 | 0,1 |
|    |        | nach  5 min. |     | 0 |
|    |        | nach 20 min. |     | 0 |
| 21 | 29:1 | nach  0 min. | 3,7 | 0 |
|    |      | nach  5 min. |     | 0 |
|    |      | nach 20 min. |     | 0 |

EP 0 451 598 B1

## Tabelle 4

| Probe | Molverhältnis NaOCl:Keton | Temperung bei 20° C | Mol.-% Keton vor Reaktion | Mol.-% Keton nach Reaktion |
|---|---|---|---|---|
| 22 | 14,5:1 | nach 0 h | 3,7 | 3,7 |
| | | nach 4 h | | 0,4 |
| | | nach 8,5 h | | 0,3 |
| | | nach 24 h | | 0,2 |
| 23 | 19,3:1 | nach 0 h | 3,7 | 3,2 |
| | | nach 4,5 h | | 0,4 |
| | | nach 9 h | | 0,3 |
| | | nach 24 h | | 0,3 |

## Tabelle 5

| Probe | Temperung bei 20° C | Mol.-% Keton vor Reaktion | Mol.-% Keton nach Reaktion |
|---|---|---|---|
| 24 | nach 0 h | 3,7 | 1,4 |
| | nach 4,5 h | | 0,3 |
| | nach 9 h | | 0,2 |
| | nach 24 h | | 0,2 |

EP 0 451 598 B1

**Tabelle 6**

| Probe | Temperung | | Mol.-% Keton vor Reaktion | Mol.-% Keton nach Reaktion |
|---|---|---|---|---|
| 25 | bei 70°C | nach 0 min. | 3,8 | 0 |
| | | nach 10 min. | | 0 |
| | | nach 60 min. | | 0 |
| 26 | bei 80°C | nach 10 min. | 3,8 | 0 |
| | | nach 60 min. | | 0 |
| 27 | bei 90°C | nach 5 min. | 3,8 | 0 |
| | | nach 20 min. | | 0 |
| 28 | bei 100°C | nach 5 min. | 3,8 | 0 |
| | | nach 20 min. | | 0 |

**Patentansprüche**

1. Verfahren zur Entfernung von bzw. zur Verminderung des Gehaltes an 1-Phosphono-1-carboxy-cyclopentan-3-on (Keton) aus einer wäßrigen Lösung von 2-Phosphonobutan-1,2,4-tricarbonsäure, dadurch gekennzeichnet, daß die Lösung mit einer wäßrigen anorganischen Base, insbesondere Natronlauge, auf einen pH-Wert von > 6 eingestellt und anschließend Bleichlauge in einem Molverhältnis von NaOCl:Keton von > 5:1 zugegeben wird.

2. Verfahren gemäß Anspruch 1, dadurch gekennzeichnet, daß die Lösung nach Zugabe der wäßrigen Bleichlauge bei 70-100°C getempert wird.

3. Verfahren gemäß Anspruch 1, dadurch gekennzeichnet, daß die Lösung vor Zugabe der Bleichlauge auf einen pH-Wert von 9 bis 10 eingestellt wird.

**4.** Verfahren gemäß Anspruch 1, dadurch gekennzeichnet, daß die Bleichlauge in einem Molverhältnis NaOCl:Keton wie 12:1 bis 30:1 zugegeben wird.

**Claims**

**1.** A process for eliminating 1-phosphono-1-carboxycyclopentan-3-one (ketone) from, or reducing its content in, an aqueous solution of 2-phosphonobutane-1,2,4-tricarboxylic acid, characterized in that the solution is adjusted to a pH value of > 6 with an aqueous inorganic base, more particularly sodium hydroxide, and bleaching liquor is then added in a molar ratio of NaOCl to ketone of > 5 : 1.

**2.** A process as claimed in claim 1, characterized in that the solution is heated at 70 to 100 °C after addition of the aqueous bleaching liquor.

**3.** A process as claimed in claim 1, characterized in that the solution is adjusted to a pH value of 9 to 10 before addition of the bleaching liquor.

**4.** A process as claimed in claim 1, characterized in that the bleaching liquor is added in a molar ratio of NaOCl to ketone of 12 : 1 to 30 : 1.

**Revendications**

**1.** Procédé pour éliminer en totalité ou en partie la 1-phosphono-1-carboxycyclopentane-3-one ("cétone") contenue dans une solution aqueuse d'acide 2-phosphonobutane-1,2,4-tricarboxylique, caractérisé en ce que l'on règle la solution à un pH supérieur à 6 à l'aide d'une base minérale aqueuse, en particulier la lessive de soude, puis on ajoute de l'eau de Javel à un rapport molaire NaOCl/cétone supérieur à 5:1.

**2.** Procédé selon la revendication 1, caractérisé en ce que l'on chauffe la solution à une température de 70 à 100 °C après addition de l'eau de Javel.

**3.** Procédé selon la revendication 1, caractérisé en ce que l'on règle la solution à un pH de 9 à 10 avant addition de l'eau de Javel.

**4.** Procédé selon la revendication 1, caractérisé en ce que l'on ajoute l'eau de Javel à un rapport molaire NaOCl/cétone de 12:1 à 30:1.